# EUROPÄISCHE PATENTANMELDUNG

(11) **EP 4 442 778 A1**
(43) Veröffentlichungstag der Anmeldung: **09.10.2024**
(21) Anmeldenummer: 23167186.8
(22) Anmeldetag: 07.04.2023
(51) Int. Cl.: C09D 103/04, C09J 103/04

(54) **VERFAHREN ZUR COEXTRUSION EINER STÄRKE MIT EINER SÄURE UND EINEM GLYOXALHALTIGEN VERNETZER**

(71) Anmelder: Agrana Beteiligungs- Aktiengesellschaft, 1020 Wien (AT)
(72) Erfinder: SEIDL, Bernhard, 3430 Tulln (AT); SCHUSTER, Markus, 3430 Tulln (AT)
(74) Vertreter: SONN Patentanwälte GmbH & Co KG

(57) **Zusammenfassung**

Die Erfindung betrifft ein Verfahren zur Herstellung eines Stärkeprodukts, umfassend die Schritte: (a) Bereitstellen einer Stärke, und (b) Coextrudieren der Stärke mit (i) einer Säure und/oder einem Salz einer Säure, und (ii) einem glyoxalhaltigen Vernetzer, um ein Stärkeprodukt zu erhalten, dadurch gekennzeichnet, dass die Säure oder das Salz der Säure einen pKs-Wert von 2,7 oder darunter aufweist, und dass die Menge des glyoxalhaltigen Vernetzers im Bereich von 0,1 bis 5,0 Gew% liegt, bezogen auf das Gewicht der Stärke. Die Erfindung betrifft weiters ein Stärkeprodukt, erhältlich mit dem erfindungsgemäßen Verfahren, wobei das Stärkeprodukt eine Menge des glyoxalhaltigen Vernetzers im Bereich von 0,1 bis 5,0 Gew% aufweist, bezogen auf das Gesamtgewicht des Stärkeprodukts. Die Erfindung betrifft auch eine Streichfarbe, aufweisend das Stärkeprodukt in einer Menge von 0,5 bis 14,0 Gew%, bezogen auf das Gesamtgewicht der Streichfarbe. Die Erfindung betrifft außerdem eine Klebstoffformulierung, aufweisend ein Stärkeprodukt in einer Menge von 5,0 bis 65,0 Gew%, bezogen auf das Gesamtgewicht der Klebstoffformulierung.

## Beschreibung

Die vorliegende Erfindung betrifft ein Verfahren zur Herstellung eines Stärkeprodukts, umfassend die Schritte:
(a) Bereitstellen einer Stärke, und
(b) Coextrudieren der Stärke mit (i) einer Säure und/oder einem Salz einer Säure, und (ii) einem glyoxalhaltigen Vernetzer, um ein Stärkeprodukt zu erhalten.

Durch die Zugabe von Säuren zu Stärken können letztere hydrolysiert und dadurch abgebaut werden. Auch können Säuren als Weichmacher für Stärken verwendet werden. Zur Viskositätsstabilisierung der Stärken beim und nach ihrem Abbau ist es im Stand der Technik bekannt, einen Vernetzer zuzugeben.

Beispielsweise wird in der WO 2016/097149 A1 ein Verfahren zur Destrukturierung von Stärken beschrieben, wobei eine organische Säure als Depolymerisationsmittel in einer Menge von 0,1 bis 10 Gew%, bezogen auf die Stärkemenge, zugegeben werden kann. Als Vernetzer kann Glyoxal in einer Menge von 0,1 bis 5 Gew%, ebenfalls bezogen auf die Stärkemenge, zugesetzt werden. Die erhaltene destrukturierte Stärke kann Elastomermischungen zur Verringerung der Hysterese beigemischt werden.

In der EP 2 370 503 A1 wird die Herstellung einer Biolatex-Konjugat-Zusammensetzung offenbart, wobei Stärke, ein Weichmacher (z.B. Zitronensäure) und ein Additiv einem Extruder zugegeben werden. Durch Scherung wird ein Biopolymer-Additiv-Komplex erzeugt, welchem in einer der Einzugszone nachgeschalteten Zone des Extruders ein Vernetzer (z.B. Glyoxal) zugegeben wird. Durch den Vernetzer kann verhindert werden, dass sich die Biolatex-Konjugat-Zusammensetzung auflöst, wenn sie in Wasser dispergiert wird.

Die CN 103467609 A beschreibt die Herstellung einer Nano-Carboxymethyl-Stärke, wobei eine Mischung aus Stärke, einem Weichmacher, Monochloressigsäure und einem Alkalisierungsmittel einem Extruder zugeführt wird. Ein Vernetzer (z.B. Glyoxal) wird dem Extruder dann zur Coextrusion mit dieser Mischung zugegeben.

Die EP 0 087 847 A1 offenbart die Herstellung kaltlöslicher Stärkepulver für die Nahrungsmittelindustrie, wobei Stärke mit einem Treibmittel extrudiert wird. Als Treibmittel kann eine organische oder eine anorganische Säure in einer Menge von 0,01 bis 10 Gew%, bezogen auf die Stärkemenge, zugegeben werden. Zur Modifizierung der Stärke kann bei der Extrusion auch ein Vernetzer, etwa Glyoxal, zugegeben werden, um die Wasserbeständigkeit des Stärkepulvers zu verbessern.

Die mit den im Stand der Technik bekannten Verfahren erhältlichen Stärkeprodukte weisen eine hohe Viskosität, eine schlechte Viskositätsstabilität und/oder eine schlechte Löslichkeit auf, was anwendungstechnisch nachteilig ist. Es besteht daher ein Bedarf an Stärkeprodukten mit verbesserten Anwendungseigenschaften. Eine Aufgabe der vorliegenden Erfindung besteht darin, zumindest einige dieser Nachteile des Stands der Technik zu lindern bzw. zu beheben.

Diese Aufgabe wird erfindungsgemäß dadurch gelöst, dass beim eingangs genannten Verfahren die Säure oder das Salz der Säure einen pKs-Wert von 2,7 oder darunter aufweist, und dass die Menge des glyoxalhaltigen Vernetzers im Bereich von 0,1 bis 5,0 Gew% liegt, bezogen auf das Gewicht der Stärke.

Überraschenderweise weisen Stärkeprodukte, die gemäß der Erfindung hergestellt werden, sowohl eine niedrige Viskosität, als auch eine gute Viskositätsstabilität und eine gute Löslichkeit auf. Dies macht sie sehr gut für eine Anwendung in Klebstoffformulierungen und Streichfarben geeignet.

Liegt hingegen die Menge des glyoxalhaltige Vernetzers unterhalb von 0,1 Gew%, bezogen auf das Gewicht der Stärke, weist das Stärkeprodukt einen geringen Abbaugrad und/oder eine unzureichende Viskositätsstabilität auf. Liegt die Menge des glyoxalhaltigen Vernetzers oberhalb von 5,0 Gew%, bezogen auf das Gewicht der Stärke, führt dies zu einer Verschlechterung der Verarbeitungseigenschaften des Stärkeprodukts. Liegt der pKs-Wert der Säure oberhalb von 2,7, weisen resultierende Stärkeprodukte eine niedrige Löslichkeit, eine hohe Viskosität und/oder eine geringe Viskositätsstabilität auf.

Die bereitgestellte Stärke kann eine beliebige Stärke, einschließlich eine Wachsstärke, sein. Auch der Einsatz von modifizierten Stärken, beispielsweise kationisierten und/oder hydrophobierten Stärken, ist möglich. Vorzugsweise ist die Stärke ausgewählt aus der Gruppe umfassend Maisstärke, Wachsmaisstärke und Weizenstärke, oder eine Mischung davon. Die erfindungsgemäß erhaltenen Stärkeprodukte eignen sich besonders gut für den Einsatz in Klebstoffformulierungen und Streichfarben.

Vorzugsweise liegt die Menge des glyoxalhaltigen Vernetzers im Bereich von 0,1 bis 2,0 Gew%, vorzugsweise von 0,5 bis 2,0 Gew%, besonders bevorzugt von 1,0 bis 1,5 Gew%, jeweils bezogen auf das Gewicht der Stärke. In diesem Bereich treten die guten Viskositäts- und Löslichkeitseigenschaften des Stärkeprodukts, die mit dem Verfahren erhalten werden, besonders gut zutage.

Der glyoxalhaltige Vernetzer kann ausgewählt sein aus der Gruppe umfassend Glyoxal und glyoxalhaltige Harze, oder eine Mischung davon. Vorzugsweise ist der glyoxalhaltige Vernetzer Glyoxal. Das Stärkeprodukt weist dann eine besonders gute Viskositätsstabilität auf. Das glyoxalhaltige Harz kann Berset 2125, Berset 2169 oder eine Mischung davon umfassen (beide erhältlich von Bercen Chemicals, USA).

Das Glyoxal kann in Form einer wässrigen Lösung enthaltend 20 bis 40 Gew% Glyoxal sein, vorzugsweise 30 bis 40 Gew% Glyoxal, bezogen auf das Gesamtgewicht der wässrigen Lösung. Das kann die Stabilität des Glyoxals erhöhen. Je höher die Glyoxalkonzentration in der wässrigen Lösung ist, umso niedriger ist die Menge an wässriger Lösung, die zugegeben werden muss, um ein Stärkeprodukt mit der gewünschten Menge an Glyoxal zu erhalten. Umso niedriger ist folglich auch die Menge an Wasser, die nachfolgend entfernt werden muss, um ein trockenes Stärkeprodukt zu erhalten, und umso energieeffizienter kann das Stärkeprodukt getrocknet werden. Besonders bevorzugt wird eine 35 bis 40 Gew%-ige wässrige Lösung von Glyoxal eingesetzt. Dadurch kann eine gute Balance zwischen der Stabilität des Glyoxals und der Verfahrenseffizienz erreicht werden.

Bevorzugt weist die Säure und/oder das Salz der Säure einen pKs-Wert von 2,5 oder darunter auf, bevorzugter von 2,35 oder darunter, besonders bevorzugt von 2,2 oder darunter. Weiters weist die Säure und/oder das Salz der Säure vorzugsweise einen pKs-Wert von -3 oder darüber auf, bevorzugter von 0 oder darüber, noch bevorzugter von 1,2 oder darüber, besonders bevorzugt von 1,9 oder darüber. Der pKs-Wert der Säure und/oder des Salzes liegt vorzugsweise im Bereich von -3 bis 2,7, bevorzugter von 0 bis 2,7, noch bevorzugter von 1,2 bis 2,5, noch bevorzugter von 1,2 bis 2,35, am bevorzugtesten von 1,9 bis 2,2. Dadurch können die Viskositäts- und Löslichkeitseigenschaften des Stärkeprodukts weiter verbessert werden.

Die Säure ist vorzugsweise ausgewählt aus der Gruppe umfassend Schwefelsäure (pKs-Wert von -3), Salpetersäure (pKs-Wert von -1,32), Phosphorsäure (pKs-Wert von 2,16) und eine Dicarbonsäure, oder eine Mischung davon. Die Dicarbonsäure umfasst vorzugsweise Oxalsäure (pKs-Wert von 1,27) und/oder Maleinsäure (pKs-Wert von 1,93). Das Salz der Säure umfasst vorzugsweise ein Hydrogensulfat, insbesondere Natriumhydrogensulfat (pKs-Wert von 1,96). Es wurde gefunden, dass ein unter Verwendung dieser Säuren bzw. Salze hergestelltes Stärkeprodukt besonders gute Anwendungseigenschaften aufweist, insbesondere eine gute Viskositätsstabilität und eine kurze Aushärtezeit, wenn es in einer Klebstoffformulierung verwendet wird. Hingegen wurde gefunden, dass der Einsatz von Malonsäure (pKs-Wert von 2,83), Weinsäure (pKs-Wert von 2,93) und Zitronensäure (pKs-Wert von 3,13), die einen pKs-Wert von über 2,7 aufweisen, zu Stärkeprodukten mit unzureichenden Eigenschaften führt, insbesondere mit einer geringen Löslichkeit sowie einer vergleichsweise hohen Viskosität oder einer niedrigen Viskositätsstabilität.

Die Menge der Säure bzw. des Salzes liegt vorzugsweise im Bereich von 1,0 bis 6,0 Gew%, bevorzugter von 1,5 bis 5,5 Gew%, bezogen auf das Gewicht der Stärke. Der Abbaugrad der Stärke liegt dann in einem optimalen Bereich, d.h. die Stärke wird ausreichend abgebaut, und zugleich kann ihre Stabilität erhalten bleiben (auch aufgrund der Anwesenheit des glyoxalhaltigen Vernetzers bei der Coextrusion). Wenn eine Säure und ein Salz mit der Stärke in Schritt (b) coextrudiert werden, beziehen sich diese Mengenangaben auf die Summe der Mengen der Säure und des Salzes.

Die Säure bzw. das Salz der Säure kann fest sein. Wird eine feste Säure bzw. ein festes Salz verwendet, kann eine Vormischung mit der Stärke hergestellt werden, und diese Vormischung kann dann extrudiert werden. Alternativ kann die feste Säure bzw. das feste Salz der Stärke in einem Extruder zugegeben werden, insbesondere in eine Einzugszone des Extruders.

Alternativ kann die Säure bzw. das Salz der Säure in einer wässrigen Lösung sein. Vorzugsweise enthält die wässrige Lösung 20 bis 40 Gew% der Säure bzw. des Salzes, bevorzugter 25 bis 35 Gew%, bezogen auf das Gesamtgewicht der wässrigen Lösung. Die wässrige Lösung der Säure bzw. des Salzes kann dann in den Extruder aufgegeben werden, insbesondere in eine Kompressionszone des Extruders. Alternativ kann ein Stärke-Slurry umfassend Wasser und 20 bis 50 Gew% Stärke, vorzugsweise 30 bis 40 Gew% Stärke, hergestellt werden (die Menge der Stärke ist auf das Gesamtgewicht des Stärke-Slurries bezogen). Diesem Stärke-Slurry kann dann so viel Säure bzw. Salz zugegeben werden, bis ein bestimmter pH-Wert erreicht ist. Vorzugsweise wird der pH-Wert des Stärke-Slurries durch Zugabe der Säure bzw. des Salzes auf 3 oder darunter eingestellt, bevorzugter auf 2 oder darunter, noch bevorzugter auf 1,5 oder darunter. Die derart angesäuerte Stärke kann dann entwässert werden, beispielsweise in einer Zentrifuge. Anschließend kann die Stärke getrocknet werden. Nach dem Trocknen umfasst die Stärke vorzugsweise eine Wassermenge von 20 Gew% oder darunter, bevorzugter 15 Gew% oder darunter, bezogen auf das Gewicht der Stärke, und kann im erfindungsgemäßen Verfahren eingesetzt werden. Bei der Entwässerung kann auch ein Teil der vorhergehend zugegebenen Säure bzw. ein Teil des vorhergehend zugegebenen Salzes entfernt werden, sodass die Menge an Säure bzw. Salz, mit der/dem die Stärke coextrudiert wird, etwas geringer sein kann, verglichen mit einer Menge an Säure bzw. Salz, wenn diese(s) direkt in den Extruder zugegeben wird. Die Menge an Säure bzw. Salz kann im Bereich von 0,1 bis 6,0 Gew% liegen, vorzugsweise von 1,0 bis 6,0 Gew%, bevorzugter von 1,5 bis 5,5 Gew%, bezogen auf das Gewicht der Stärke.

Bevorzugt wird der Stärke bei der Coextrusion in Schritt (b) ein Viskositätsstabilisator zugegeben. Dadurch können die Extrudierbarkeit der Stärke und die Viskositätseigenschaften des Stärkeprodukts weiter verbessert werden. Der Viskositätsstabilisator umfasst vorzugsweise einen Fettalkohol. Unter einem Fettalkohol wird dabei ein aliphatischer, einwertiger Alkohol verstanden, vorzugsweise ein primärer Alkohol. Bevorzugt enthält der Fettalkohol 10 bis 20 Kohlenstoffatome pro Molekül, bevorzugter 14 bis 18, insbesondere 16. Derartige Fettalkohole lassen sich gut mit der Stärke, dem glyoxalhaltigen Vernetzer und der Säure bzw. dem Salz mischen und coextrudieren.

Vorzugsweise wird der Viskositätsstabilisator in einer Menge von 0,1 bis 1,5 Gew% zugegeben, bevorzugter von 0,3 bis 1,3 Gew%, noch bevorzugter von 0,5 bis 1 Gew%, bezogen auf das Gewicht der Stärke. Dadurch kann die Homogenität des Stärkeprodukts weiter verbessert werden.

Wird der Stärke ein Viskositätsstabilisator zugegeben, liegt die Menge des glyoxalhaltigen Vernetzers vorzugsweise im Bereich von 0,2 bis 0,7 Gew%, bevorzugter von 0,4 bis 0,6 Gew%, bezogen auf das Gewicht der Stärke. Dadurch kann die Stabilisierung der Viskosität der Stärke bei der Coextrusion optimiert werden. Die Menge des glyoxalhaltigen Vernetzers kann aber auch oberhalb dieses bevorzugten Bereichs liegen und können Prozessparameter beim Extrudieren angepasst werden, etwa die Drehzahl und/oder die Temperatur im Extruder.

Bei der Coextrusion in Schritt (b) wird einerseits zumindest ein Teil der funktionellen Gruppen, insbesondere Hydroxylgruppen, der Stärke in Gegenwart der Säure bzw. dem Salz hydrolysiert, wodurch die Stärke zumindest teilweise abgebaut (d.h. destrukturiert) wird. Andererseits reagiert zumindest ein Teil der funktionellen Gruppen der Stärke mit dem glyoxalhaltigen Vernetzer, wodurch die Vernetzungsdichte und/oder der Verzweigungsgrad der Stärke erhöht wird/werden. Dementsprechend kann bei der Extrusion des erfindungsgemäßen Stärkeprodukts eine vergleichsweise hohe spezifische mechanische Energie eingebracht werden, um ein homogenes Stärkeprodukt herzustellen.

Die Coextrusion kann in einem Doppelschneckenextruder durchgeführt werden. Hierdurch kann ein homogenes Stärkeprodukt erhalten werden. Die (gegebenenfalls angesäuerte) Stärke kann in einer Einzugszone des Extruders zugegeben werden. Falls noch keine Säure bzw. kein Salz zugesetzt wurde, kann die Zugabe im Extruder erfolgen, wie oben beschrieben.

In Schritt (b) liegt die Temperatur in der Ausstoßzone des Extruders vorzugsweise im Bereich von 100 bis 180 °C, bevorzugter von 120 bis 150 °C, noch bevorzugter von 135 bis 145 °C. Von der Einzugszone bis zur Ausstoßzone wird die Temperatur vorzugsweise schrittweise erhöht. In der Einzugszone selbst kann die Temperatur im Bereich von 20 bis 30 °C liegen. Auch hierdurch kann eine gute Plastifizierung und Durchmischung erreicht werden.

Bei der Coextrusion können 90 Gew% oder mehr des glyoxalhaltigen Vernetzers mit der Stärke reagieren, vorzugsweise 95 Gew% oder mehr, noch bevorzugter 99 Gew% oder mehr, bezogen auf das Gewicht der Stärke. Die erfindungsgemäß hohe Ausbeute der Reaktion der Stärke mit dem glyoxalhaltigen Vernetzer kann durch eine Abluftanalyse der aus dem Extruder austretenden Dämpfe festgestellt werden. Wenn die Massetemperatur im Extruder bei der Coextrusion die Siedetemperatur des glyoxalhaltigen Vernetzers überschreitet, hat das zur Folge, dass ein nicht reagierter glyoxalhaltiger Vernetzer verdampft. Beispielsweise hat eine 40 Gew%-ige wässrige Lösung von Glyoxal einen Siedepunkt von 104 °C. Eine Massetemperatur von 104 °C kann im Verfahren schon alleine aufgrund der voreingestellten Temperatur (welche durch Scherung noch weiter zunehmen kann) erreicht bzw. überschritten werden. Überraschenderweise ist der glyoxalhaltige Vernetzer erfindungsgemäß in der Abluft dennoch nicht nachweisbar, was auf eine im Wesentlichen vollständige Reaktion mit der Stärke hinweist. Somit kann das erfindungsgemäße Verfahren effizient und umweltfreundlich durchgeführt werden.

Das Verfahren kann einen weiteren Schritt (c) umfassen: Trocknen des Stärkeprodukts. Dadurch kann das Stärkeprodukt härter und/oder spröder gemacht werden, was eine Weiterverarbeitung, insbesondere eine Vermahlung, erleichtern kann. Zum Trocknen des Stärkeprodukts kann ein Trockner verwendet werden, vorzugsweise ein Fließbetttrockner. Hierdurch kann das Stärkeprodukt gut getrocknet werden, ohne es thermisch zu schädigen.

Nach dem Trocknen in Schritt (c) kann das Stärkeprodukt vermahlen werden. Dadurch kann das Stärkeprodukt lagerfähig und verkaufsfertig gemacht werden. In dieser Form kann es auch gut für die Herstellung von Klebstoffformulierungen oder Streichfarben verwendet werden. Vorzugsweise wird das Stärkeprodukt zu einem Pulver mit einer d₅₀-Partikelgröße von 200 bis 400 µm vermahlen, bevorzugter von 250 bis 350 µm. Das Stärkeprodukt kann dann leicht in eine Formulierung eingemischt werden, was für die Herstellung von Klebstoffformulierungen oder Streichfarben vorteilhaft ist. Die in diesem Absatz und nachfolgend angegebenen d₅₀-Partikelgrößen werden nach der Norm ISO 8130-13:2019 bestimmt.

Die Erfindung betrifft weiters ein Stärkeprodukt, erhältlich durch das erfindungsgemäße Verfahren und aufweisend eine Menge des glyoxalhaltigen Vernetzers im Bereich von 0,1 bis 5,0 Gew%, vorzugsweise von 0,2 bis 2,0 Gew%, bevorzugter von 0,5 bis 2,0 Gew%, noch bevorzugter von 1,0 bis 1,5 Gew%, bezogen auf das Gesamtgewicht des Stärkeprodukts. Ein solches Stärkeprodukt weist sowohl eine niedrige Viskosität, als auch eine gute Viskositätsstabilität und eine gute Löslichkeit auf.

Vorzugsweise weist das Stärkeprodukt eine Menge der Säure bzw. des Salzes im Bereich von 0,3 bis 6,0 Gew% auf, bevorzugter von 1,0 bis 5,5 Gew%, bezogen auf das Gesamtgewicht des Stärkeprodukts. Wenn das Stärkeprodukt eine Säure und ein Salz enthält, beziehen sich diese Mengenangaben auf die Summe der Mengen der Säure und des Salzes.

Das Stärkeprodukt weist bevorzugt eine Löslichkeit von 70% oder darüber auf, bevorzugter von 80% oder darüber, noch bevorzugter von 85% oder darüber, besonders bevorzugt von 90% oder darüber. Dies kann die Herstellung von Streichfarben oder Klebstoffformulierungen, in welchen das Stärkeprodukt verwendet wird, erleichtern. Die Löslichkeitsangaben dieses Absatzes und im Nachfolgenden werden gemäß der Methode 2 dieser Beschreibung ermittelt.

Vorzugsweise weist das Stärkeprodukt eine Viskosität von 5000 mPas oder darunter auf, bevorzugter von 2500 mPas oder darunter, noch bevorzugter von 2000 mPas oder darunter, noch bevorzugter von 600 mPas oder darunter, besonders bevorzugt im Bereich von 100 bis 600 mPas. Eine niedrigere Viskosität kann die Herstellung von Streichfarben oder Klebstoffformulierungen vereinfachen. Auch anwendungstechnisch gesehen kann eine niedrige Viskosität Vorteile bringen, da das Auftragen solcher Streichfarben bzw. Klebstoffformulierungen dann leicht erfolgen kann. Bevorzugt liegt die Viskosität des Stärkeprodukts zur Anwendung in Streichfarben, insbesondere Papierstreichfarben, bei 2000 mPas oder darunter (für 25 Gew% des Stärkeprodukts in Wasser). Weiters liegt die Viskosität des Stärkeprodukts zur Anwendung für Klebstoffe vorzugsweise bei 5000 mPas oder darunter (für 50 Gew% Stärkeprodukt in Wasser). Die Viskositätsangaben dieses Absatzes und im Nachfolgenden werden gemäß der Methode 1 dieser Beschreibung ermittelt.

Bevorzugt weist das Stärkeprodukt eine Viskositätsstabilität von 2,1 oder darunter auf, bevorzugter von 1,4 oder darunter, noch bevorzugter von 1,15 oder darunter, besonders bevorzugt von 0,96 oder darunter. Das bedeutet, dass sich die Viskosität im Zeitraum von 24 h bis 168 h nach der Herstellung des Stärkeprodukts nur wenig bzw. nicht signifikant ändert. Das Stärkeprodukt hat dann eine gute Lagerstabilität. Die Angaben zur Viskositätsstabilität dieses Absatzes und im Nachfolgenden werden gemäß der Methode 1 dieser Beschreibung ermittelt.

Das Stärkeprodukt weist vorzugsweise eine d₅₀-Partikelgröße von 200 bis 400 µm auf, bevorzugter von 250 bis 350 µm. Daraus kann eine leichte Einmischbarkeit des Stärkeprodukts resultieren, was für die Herstellung von Klebstoffformulierungen oder Streichfarben vorteilhaft ist.

Die Erfindung betrifft weiters eine Streichfarbe, aufweisend das erfindungsgemäße Stärkeprodukt in einer Menge von 0,5 bis 14,0 Gew%, vorzugsweise von 1,0 bis 8,0 Gew%, bezogen auf das Gesamtgewicht der Streichfarbe. Eine solche Streichfarbe lässt sich aufgrund der guten Viskositäts- und Löslichkeitseigenschaften des Stärkeprodukts einfach herstellen und hat gute Anwendungseigenschaften.

Die Erfindung betrifft weiters eine Klebstoffformulierung, aufweisend das erfindungsgemäße Stärkeprodukt in einer Menge von 5,0 bis 65,0 Gew%, vorzugsweise von 10,0 bis 50,0 Gew%, bezogen auf das Gesamtgewicht der Klebstoffformulierung. Eine solche Klebstoffformulierung lässt sich aufgrund der guten Viskositäts- und Löslichkeitseigenschaften des Stärkeprodukts einfach herstellen und hat gute Anwendungseigenschaften.

Eine Aushärtezeit der Klebstoffformulierung liegt vorzugsweise bei 70 sec oder darunter, vorzugsweise bei 60 sec oder darunter, ermittelt gemäß der Methode 3. Dadurch kann eine ausreichende Klebekraft und Stabilität rasch gewährleistet werden.

Die Klebstoffformulierung weist vorzugsweise einen Wassergehalt von 40 Gew% oder darunter auf, bevorzugt von 35 Gew% oder darunter, bezogen auf das Gesamtgewicht der Klebstoffformulierung. Dementsprechend kann der Wassereintrag in das zu verklebende Material (z.B. Papier) und damit in weiterer Folge die Trocknungszeit reduziert werden.

Weiters offenbart wird die Verwendung des erfindungsgemäßen Stärkeprodukts in einer Streichfarbe oder einer Klebstoffformulierung.

Alle %-Angaben in dieser Beschreibung sind in Gewichtsprozent (Gew%), wenn nicht ausdrücklich anders angegeben.

Die Erfindung betrifft insbesondere die folgenden Ausführungsformen:
1. Verfahren zur Herstellung eines Stärkeprodukts, umfassend die Schritte:
   (a) Bereitstellen einer Stärke, und
   (b) Coextrudieren der Stärke mit (i) einer Säure und/oder einem Salz einer Säure, und (ii) einem glyoxalhaltigen Vernetzer, um ein Stärkeprodukt zu erhalten,

   wobei die Säure oder das Salz der Säure einen pKs-Wert von 2,7 oder darunter aufweist, und
   wobei die Menge des glyoxalhaltigen Vernetzers im Bereich von 0,1 bis 5,0 Gew% liegt, bezogen auf das Gewicht der Stärke.
2. Verfahren nach Ausführungsform 1, wobei die Stärke ausgewählt ist aus der Gruppe umfassend Maisstärke, Wachsmaisstärke und Weizenstärke, oder eine Mischung davon.
3. Verfahren nach Ausführungsform 1 oder 2, wobei die Menge des glyoxalhaltigen Vernetzers im Bereich von 0,2 bis 2,0 Gew% liegt, vorzugsweise von 0,5 bis 2,0 Gew%, bevorzugter von 1,0 bis 1,5 Gew%, bezogen auf das Gewicht der Stärke.
4. Verfahren nach einer der Ausführungsformen 1 bis 3, wobei der glyoxalhaltige Vernetzer ausgewählt ist aus der Gruppe umfassend Glyoxal und glyoxalhaltige Harze, oder eine Mischung davon, vorzugsweise Glyoxal.
5. Verfahren nach Ausführungsform 4, wobei das Glyoxal in wässriger Lösung ist, wobei die wässrige Lösung 20 bis 40 Gew% Glyoxal enthält, vorzugsweise 30 bis 40 Gew%, bevorzugter 35 bis 40 Gew%, bezogen auf das Gesamtgewicht der wässrigen Lösung.
6. Verfahren nach einer der Ausführungsformen 1 bis 5, wobei die Säure und/oder das Salz einen pKs-Wert von 2,5 oder darunter aufweist, vorzugsweise von 2,35 oder darunter, bevorzugter von 2,2 oder darunter; ; und/oder wobei die Säure und/oder das Salz einen pKs-Wert von -3 oder darüber aufweist, bevorzugter von 0 oder darüber, noch bevorzugter von 1,2 oder darüber, besonders bevorzugt von 1,9 oder darüber; wobei der pKs-Wert der Säure und/oder des Salzes vorzugsweise im Bereich von -3 bis 2,7 liegt, bevorzugter von 0 bis 2,7, noch bevorzugter von 1,2 bis 2,5, noch bevorzugter von 1,2 bis 2,35, am bevorzugtesten von 1,9 bis 2,2.
7. Verfahren nach einer der Ausführungsformen 1 bis 6, wobei die Säure ausgewählt ist aus der Gruppe umfassend Schwefelsäure, Salpetersäure, Phosphorsäure und eine Dicarbonsäure, oder eine Mischung davon.
8. Verfahren nach Ausführungsform 7, wobei die Dicarbonsäure Oxalsäure und/oder Maleinsäure umfasst.
9. Verfahren nach einer der Ausführungsformen 1 bis 8, wobei das Salz ein Hydrogensulfat umfasst.
10. Verfahren nach Ausführungsform 9, wobei das Salz Natriumhydrogensulfat umfasst.
11. Verfahren nach einer der Ausführungsformen 1 bis 10, wobei die Menge der Säure und/oder des Salzes im Bereich von 0,1 bis 6,0 Gew% liegt, vorzugsweise von 1,0 bis 6,0 Gew%, bevorzugter von 1,5 bis 5,5 Gew%, bezogen auf das Gewicht der Stärke.
12. Verfahren nach einer der Ausführungsformen 1 bis 11, wobei die Säure oder das Salz fest ist, wobei vorzugsweise vor Schritt (b) die Stärke mit der Säure oder dem Salz gemischt wird, um eine Vormischung zu erhalten.
13. Verfahren nach einer der Ausführungsformen 1 bis 11, wobei die Säure oder das Salz fest ist, und wobei die Säure oder das Salz der Stärke in einer Einzugszone eines Extruders zugegeben wird.
14. Verfahren nach einer der Ausführungsformen 1 bis 11, wobei die Säure oder das Salz in einer wässrigen Lösung ist, wobei eine Menge der Säure oder des Salzes in der wässrigen Lösung vorzugsweise im Bereich von 20 bis 40 Gew% liegt, bevorzugter von 25 bis 35 Gew%, bezogen auf das Gesamtgewicht der wässrigen Lösung.
15. Verfahren nach Ausführungsform 14, wobei die Säure oder das Salz der Stärke in einer Kompressionszone des Extruders zugegeben wird.
16. Verfahren nach Ausführungsform 14, wobei die Säure oder das Salz vor Schritt (a) einem Stärke-Slurry enthaltend 20 bis 50 Gew% Stärke (bezogen auf das Gesamtgewicht des Stärke-Slurries) zugegeben wird, vorzugsweise bis zum Erreichen eines pH-Werts des Stärke-Slurries von 3 oder darunter, bevorzugter 2 oder darunter, besonders bevorzugt 1,5 oder darunter.
17. Verfahren nach einer der Ausführungsformen 1 bis 16, wobei die Stärke in Schritt (b) zusätzlich mit einem Viskositätsstabilisator coextrudiert wird.
18. Verfahren nach Ausführungsform 17, wobei der Viskositätsstabilisator einen Fettalkohol umfasst.
19. Verfahren nach Ausführungsform 18, wobei der Fettalkohol 10 bis 20 Kohlenstoffatome pro Molekül enthält, vorzugsweise 14 bis 18, insbesondere 16.
20. Verfahren nach einer der Ausführungsformen 17 bis 19, wobei der Viskositätsstabilisator in einer Menge von 0,1 bis 1,5 Gew% zugegeben wird, bevorzugter von 0,3 bis 1,3 Gew%, noch bevorzugter von 0,5 bis 1 Gew%, bezogen auf das Gewicht der Stärke.
21. Verfahren nach einer der Ausführungsformen 1 bis 20, wobei die Coextrusion in Schritt (b) in einem Doppelschneckenextruder erfolgt.
22. Verfahren nach einer der Ausführungsformen 1 bis 21, wobei die Stärke in einer Einzugszone eines Extruders zugegeben wird.
23. Verfahren nach einer der Ausführungsformen 1 bis 22, wobei der glyoxalhaltige Vernetzer, insbesondere eine Glyoxal-Lösung, in einer Kompressionszone eines Extruders zugegeben wird.
24. Verfahren nach einer der Ausführungsformen 1 bis 23, wobei in Schritt (b) die Temperatur in der Ausstoßzone eines Extruders im Bereich von 100 bis 180 °C liegt, vorzugsweise von 120 bis 150 °C, bevorzugter von 135 bis 145 °C.
25. Verfahren nach einer der Ausführungsformen 1 bis 24, weiters umfassend Schritt (c): Trocknen des Stärkeprodukts.
26. Verfahren nach Ausführungsform 25, wobei das Trocknen des Stärkeprodukts in Schritt (c) in einem Fließbetttrockner erfolgt.
27. Verfahren nach Ausführungsform 25 oder 26, wobei das Stärkeprodukt nach Schritt (c) vermahlen wird, vorzugsweise zu einem Pulver mit einer d₅₀-Partikelgröße von 200 bis 400 µm, bevorzugter von 250 bis 350 µm.
28. Stärkeprodukt, erhältlich durch ein Verfahren nach einer der Ausführungsformen 1 bis 27, wobei das Stärkeprodukt eine Menge des glyoxalhaltigen Vernetzers im Bereich von 0,1 bis 5,0 Gew% aufweist, vorzugsweise von 0,2 bis 2,0 Gew%, bevorzugter von 0,5 bis 2,0 Gew%, noch bevorzugter von 1,0 bis 1,5 Gew%, bezogen auf das Gesamtgewicht des Stärkeprodukts.
29. Stärkeprodukt nach Ausführungsform 28, wobei das Stärkeprodukt eine Menge der Säure und/oder des Salzes der Säure im Bereich von 0,3 bis 6,0 Gew% aufweist, vorzugsweise von 1,0 bis 5,5 Gew%, bezogen auf das Gesamtgewicht des Stärkeprodukts.
30. Stärkeprodukt nach Ausführungsform 28 oder 29, wobei das Stärkeprodukt eine Löslichkeit von 70% oder darüber aufweist, bevorzugter von 80% oder darüber, noch bevorzugter von 85% oder darüber, besonders bevorzugt von 90% oder darüber.
31. Stärkeprodukt nach einer der Ausführungsformen 28 bis 30, wobei das Stärkeprodukt eine Viskosität von 5000 mPas oder darunter aufweist, vorzugsweise von 2500 mPas oder darunter, bevorzugter von 2000 mPas oder darunter, noch bevorzugter von 600 mPas oder darunter, besonders bevorzugt im Bereich von 100 bis 600 mPas.
32. Stärkeprodukt nach einer der Ausführungsformen 28 bis 31, wobei das Stärkeprodukt eine Viskositätsstabilität von 2,1 oder darunter aufweist, bevorzugter von 1,4 oder darunter, noch bevorzugter von 1,15 oder darunter, besonders bevorzugt von 0,96 oder darunter.
33. Stärkeprodukt nach einer der Ausführungsformen 28 bis 32, wobei das Stärkeprodukt eine d₅₀-Partikelgröße von 200 bis 400 µm aufweist, bevorzugter von 250 bis 350 µm.
34. Streichfarbe, aufweisend ein Stärkeprodukt nach einer der Ausführungsformen 28 bis 33 in einer Menge von 0,5 bis 14,0 Gew%, vorzugsweise von 1,0 bis 8,0 Gew%, bezogen auf das Gesamtgewicht der Streichfarbe.
35. Klebstoffformulierung, aufweisend ein Stärkeprodukt nach einer der Ausführungsformen 28 bis 33 in einer Menge von 5,0 bis 65,0 Gew%, vorzugsweise von 10,0 bis 50,0 Gew%, bezogen auf das Gesamtgewicht der Klebstoffformulierung.
36. Klebstoffformulierung nach Ausführungsform 35, wobei eine Aushärtezeit der Klebstoffformulierung bei 70 sec oder darunter liegt, vorzugsweise bei 60 sec oder darunter, ermittelt gemäß der Methode 3.
37. Klebstoffformulierung nach Ausführungsform 35 oder 36, wobei die Klebstoffformulierung einen Wassergehalt von 40 Gew% oder darunter aufweist, bevorzugt von 35 Gew% oder darunter, bezogen auf das Gesamtgewicht der Klebstoffformulierung.
38. Verwendung eines Stärkeprodukts nach einer der Ausführungsformen 28 bis 33 in einer Streichfarbe oder einer Klebstoffformulierung.

### Beispiele

### Beispiel 1 - Herstellung und Analyse von Stärkeprodukten

Die in Tabelle 1 angeführten 20 Versuche wurden durchgeführt. Für die Versuche wurden Weizenstärke (WS), Maisstärke (MS) und Wachsmaisstärke (WMS) verwendet. Als Säuren bzw. Salze von Säuren kamen Natriumhydrogensulfat (NaHSO₄), Oxalsäure, Schwefelsäure (H₂SO₄), Phosphorsäure (H₃PO₄), Maleinsäure, Zitronensäure und Weinsäure zum Einsatz. Die in Tabelle 1 angegebenen Angaben in Gew% beziehen sich auf das Gewicht der Stärke.

Bei den Versuchen 1-9, 14 und 16-20 wurde die Säure bzw. das Salz der Stärke in fester Form zugesetzt und in einem Fassmischer (Zimmermann Rhönradbau und Rohrbiegefertigungs GmbH, Deutschland) eine Vormischung bereitet, um eine angesäuerte Stärke zu erhalten.

Bei den Versuchen 10, 11 und 15 wurden zunächst in einem großen Kunststoffrührbehälter Stärke-Slurries enthaltend Wasser und 35 Gew% Stärke hergestellt. Der pH-Wert dieser Stärke-Slurries wurde dann durch Zugabe der Säure auf den in Tabelle 1 jeweils angegebenen Wert eingestellt. Danach wurden die Stärke-Slurries in einer Zentrifuge entwässert und mit einem Flash-Trockner (Anhydro Spin Flash Trockner, SPX Flow Technology Germany GmbH, Deutschland) getrocknet. Nach der Trocknung enthielten die angesäuerten Stärken noch etwa 12 Gew% Wasser.

Bei den Versuchen 12 und 13 wurde die Säure (wässrige Lösung von Phosphorsäure) direkt in die Kompressionszone des Extruders zudosiert.

Die Versuche 19 und 20 entsprechen dem Beispiel 1 auf S. 19-20 der WO 2016/097149 A1, wobei 14,4 Gew% Glycerol in Versuch 19 zugesetzt wurde (bezogen auf das Gesamtgewicht des Stärkeprodukts), um das Beispiel 1 dieses Dokuments identisch nachzuarbeiten, während in Versuch 20 kein Glycerol enthalten war, um eine bessere Vergleichbarkeit mit den übrigen Versuchen zu ermöglichen.

Zur Extrusion wurde ein Doppelschneckenextruder (TSK-30/28D, Theysohn Extrusionstechnik GmbH, Deutschland) verwendet. Die (ggf. angesäuerte) Stärke wurde dem Extruder in der Einzugszone zugegeben. In der Kompressionszone wurden Wasser und eine 40 Gew%-ige wässrige Lösung von Glyoxal zudosiert. Auch wässrige Lösungen von Säuren (in den Versuchen 12 und 13) wurden in der Kompressionszone zugegeben. Es wurde so viel Wasser zudosiert, dass der Trockengehalt bei 83 Gew% lag (bezogen auf das Gesamtgewicht der zu extrudierenden Mischung). Durch die Wasserzugabe kann die Scherung bei der Extrusion und dadurch der Abbau der Stärkeprodukte verringert werden. Bei der Extrusion wurden die folgenden Parameter eingesetzt: Leistung: 10 kg/h; Drehzahl: 300 UpM; Düsengeometrie: 2x3,5 mm; Temperatur in den einzelnen Zonen (von der Einzugszone bis hin zur Ausstoßzone): 20/30/40/50/80/100/120/140 °C.

Die extrudierten Stärkeprodukte wurden in einem Fließbettrockner (Jöst GmbH + Co. KG, Deutschland) getrocknet und mit einer Feinprallmühle (Ultraplex UPZ 100, Hosokawa Alpine, Deutschland) ausgestattet einem Siebeinsatz mit 1 mm Maschenweite zu einem Pulver mit einer d₅₀-Partikelgröße von ca. 300 µm vermahlen.

Anschließend wurden die Viskosität, die Viskositätsstabilität sowie die Löslichkeit der Stärkeprodukte anhand der in dieser Beschreibung angegebenen Methoden 1 und 2 ermittelt. Die Ergebnisse sind in Tabelle 1 angeführt. Bei den Versuchen Nr. 1-8 und 10-15 wurden erfindungsgemäße Stärkeprodukte mit einer niedrigen Viskosität, einer guten Viskositätsstabilität und einer guten Löslichkeit erhalten. Die Konzentration, welche die Stärkeprodukte bei der Bestimmung der Viskosität hatten, sind ebenfalls in Tabelle 1 angegeben.

Es ist deutlich aus Tabelle 1 ersichtlich, dass mit Säuren, die einen pKs-Wert von 2,83 oder darüber haben, die geforderten Eigenschaften nicht erreicht werden (Versuche Nr. 16-20). Vor allem die Löslichkeit dieser Stärkeprodukte ist vergleichsweise niedrig und liegt bei 60% oder darunter. Die Versuche Nr. 16-19 weisen weiters eine vergleichsweise hohe Viskosität auf, während die Viskositätsstabilität des Versuchs 20 vergleichsweise gering ist.

Weiters ist ersichtlich, dass das Stärkeprodukt, dem kein Glyoxal zugesetzt wurde (Versuch Nr. 9), bereits unmittelbar nach der Herstellung eine sehr hohe Viskosität aufweist, was es ungeeignet für die Anwendung in Klebstoffformulierungen oder Streichfarben macht. Die Viskosität betrug bereits nach 24 h 10.000 mPas und stieg im Laufe der Woche so stark an, dass die Viskosität nach 168 h nicht bestimmbar war, und folglich auch nicht die Viskositätsstabilität.

**Tabelle 1: Ausgangskomponenten für die Herstellung von Stärkeprodukten, sowie Viskosität (Zeit t=0), Viskositätsstabilität (168 h / 24 h) und Löslichkeit von Stärkeprodukten**

| **Nr.** | **Stärke¹** | **Säure bzw. Salz** | | | **Menge Glyoxal (Gew%)⁴** | **Konzentration (%)** | **Viskosität (mPas)** | | **Löslichkeit (%)** |
|---|---|---|---|---|---|---|---|---|---|
| | | **Typ** | **Menge (Gew%)** | **pKs** | | | **t = 0** | **168h / 24h** | |
| 1 | WS | NaHSO₄ | 2,0 | 1,96 | 2,0 | 25 | 428 | 0,96 | 96 |
| 2 | MS | NaHSO₄ | 2,0 | 1,96 | 2,0 | 25 | 209 | 0,80 | 94 |
| 3 | WMS | NaHSO₄ | 2,0 | 1,96 | 2,0 | 50 | 2220 | 1,13 | 100 |
| 4 | WS | NaHSO₄ | 5,0 | 1,96 | 2,0 | 25 | 283 | 0,80 | 93 |
| 5 | WS | Oxalsäure | 2,0 | 1,27 | 2,0 | 50 | 2244 | 1,00 | 99 |
| 6 | WS | Oxalsäure | 2,0 | 1,27 | 2,0 | 25 | <100 | 1,00 | 99 |
| 7 | WS | Oxalsäure | 2,0 | 1,27 | 1,0 | 25 | 124 | 1,30 | 92 |
| 8 | WS | Oxalsäure | 2,0 | 1,27 | 0,4 | 25 | 430 | 1,9 | 86 |
| 9 | WS | Oxalsäure | 2,0 | 1,27 | 0 | 25 | 5290 | n.b.⁵ | 84 |
| 10 | WS | H₂SO₄ | pH 2,0² | -3,00 | 2,0 | 25 | 266 | 1,30 | 96 |
| 11 | WS | H₂SO₄ | pH 1,3² | -3,00 | 2,0 | 50 | 1440 | 1,10 | 96 |
| 12 | WS | H₃PO₄ | 1,5³ | 2,16 | 2,0 | 25 | 535 | 1,22 | 93 |
| 13 | WMS | H₃PO₄ | 1,5³ | 2,16 | 2,0 | 50 | 1900 | 1,90 | 100 |
| 14 | WS | Maleinsäure | 2,0 | 1,93 | 2,0 | 25 | 195 | 0,90 | 87 |
| 15 | WS | Maleinsäure | pH 1,4² | 1,93 | 2,0 | 25 | 120 | 1,11 | 92 |
| 16 | WS | Malonsäure | 2,0 | 2,83 | 2,0 | 25 | 11240 | 1,00 | 41 |
| 17 | WS | Zitronen -säure | 2,0 | 3,13 | 2,0 | 25 | 2308 | 1,00 | 48 |
| 18 | WS | Weinsäure | 2,0 | 2,93 | 2,0 | 25 | 6010 | 1,00 | 60 |
| 19 | MS | Zitronen -säure | 1,8 | 3,13 | 1,4 | 25 | 6000 | 1,30 | 51 |
| 20 | MS | Zitronen -säure | 1,8 | 3,13 | 1,4 | 25 | 328 | 2,42 | 34 |

| | | | | | | | | | |
|---|---|---|---|---|---|---|---|---|---|
| ¹ WS = Wachsstärke, MS = Maisstärke, WMS = Wachsmaisstärke ² es wurde so viel Säure zugegeben, bis der pH-Wert den angegebenen Wert erreichte ³ entspricht 5 Gew% einer 30 Gew%-igen, wässrigen Lösung von Phosphorsäure ⁴ die angegebenen Glyoxal-Mengen von 0,4 bis 2,0 Gew% entsprechen 1,0 bis 5,0 Gew% einer 40 Gew%-igen wässrigen Lösung von Glyoxal ⁵ n.b. ... nicht bestimmbar | | | | | | | | | |

### Beispiel 2 - Herstellung und Analyse von Streichfarben

Einige der in Beispiel 1 hergestellten Stärkeprodukte wurden zur Herstellung von Streichfarben verwendet. Referenz-Streichfarben wurden unter Verwendung handelsüblicher Stärkeprodukte hergestellt. Eingesetzt wurden Amitrocoat 8903 (Agrana, Österreich) und iCoat (Cargill, USA).

Calciumcarbonat (Omya Hydrocarb 90, Omya, Schweiz) und der Großteil an benötigtem deionisiertem Wasser wurden vorgelegt und das jeweilige Stärkeprodukt wurde mit einem Turbinenrührer bei 1000 UpM für 10 min eingeschert. Nach Zugabe von Latex (Styronal D 809, BASF, Deutschland) wurde weitere 3 min mit 1000 UpM gerührt. Während dem Rühren wurde tropfenweise 0,5 M NaOH zugegeben, bis ein pH-Wert von 8,5 erreicht wurde. Dann wurde das restliche deionisierte Wasser zugegeben. Es wurden 350 g Streichfarbe je Ansatz hergestellt. Die Zusammensetzungen und Eigenschaften der Streichfarben sind aus Tabelle 3 ersichtlich.

Nach Messung der Viskosität (gemäß Methode 1) wurde bei einer Viskosität von unter 1000 mPas eine geringe Menge eines Verdickers Sterocoll FS (BASF, Deutschland), bei dem es sich um eine wässrige Dispersion eines Acrylcopolymers handelt, unter Rühren zupipettiert. Anschließend wurde 10 min gerührt, danach wurde die Viskosität erneut gemessen, und gegebenenfalls wurde noch mehr Sterocoll zugegeben, bis eine Viskosität von 1000 mPas oder darüber erreicht wurde. Die Viskosität lag bei allen untersuchten Streichfarben im Bereich von 1024 bis 2164 mPas.

Eine definierte Menge der Streichfarbe wurde durch ein Sieb mit einer Porengröße von 45 µm abfiltriert. Der Rückstand wurde bei 100 °C getrocknet und danach gewogen. Die Werte lagen im ppm-Bereich, wie aus Tabelle 2 ersichtlich ist.

Die Bestimmung der Hochscherviskosität bei einer Scherrate von 50 000 s⁻¹ und einer Temperatur von 25 °C erfolgte mit dem Physica MCR 301 Rheometer (Anton Paar, Österreich) mit einem speziellen Zylinder-Becher Messsystem (C-CC 48.55/ST/CUST1 von Anton Paar, Österreich) mit einem Spaltabstand von 100 µm durch Messung der Viskosität in Abhängigkeit der Scherrate, welche von 100 s⁻¹ bis 50 000 s⁻¹ variiert wurde. Die Ergebnisse sind Tabelle 2 entnehmbar.

**Tabelle 2: Zusammensetzungen und Eigenschaften von Streichfarben**

| **Versuch Nr.** | **1** | **2** | **4** | **10** | **15** | **iCoat** | **Amitrocoat 8903** |
|---|---|---|---|---|---|---|---|
| **Zusammensetzungen** | | | | | | | |
| Calciumcarbonat | 100 | 100 | 100 | 100 | 100 | 100 | 100 |
| Latex (pph)¹ | 4,5 | 4,5 | 4,5 | 4,5 | 4,5 | 4,5 | 4,5 |
| Stärke (pph)¹ | 4,5 | 4,5 | 4,5 | 4,5 | 4,5 | 4,5 | 4,5 |
| Verdicker (pph)¹ | 0,48 | 0,37 | 0,07 | 1,88 | 0,80 | 0,59 | 0 |

| **Eigenschaften** | | | | | | | |
|---|---|---|---|---|---|---|---|
| Feststoffgehalt (Gew%) | 70,10 | 70,03 | 70,09 | 69,94 | 70,01 | 70,01 | 70,02 |
| pH-Wert | 8,5 | 8,5 | 8,5 | 8,5 | 8,5 | 8,5 | 8,5 |
| Temperatur (°C) | 24 | 25 | 27 | 25 | 26 | 24 | 25 |
| Viskosität (mPas) | 1132 | 1032 | 1024 | 1132 | 1268 | 1040 | 2164 |
| Rückstand (ppm) | 80 | 92 | 83 | 20 | 69 | 12 | 122 |
| Hochscherviskosität bei 50 000 s⁻¹ (mPas) | 50,8 | 43,2 | 33,0 | 37,4 | 36,4 | 49,9 | 47,8 |

| | | | | | | | |
|---|---|---|---|---|---|---|---|
| ¹ pph ... Teile pro Hundert (parts per hundred) | | | | | | | |

### Beispiel 3 - Herstellung und Analyse von Klebstoffformulierungen

Klebstoffformulierungen umfassend Stärke, Calciumcarbonat als Füllstoff (Omyacarb 2, Omya, Österreich) und einem Biozid (Acticide MBS, Thor, Deutschland) wurden hergestellt. Dazu wurden alle Komponenten mit deionisiertem Wasser vermengt, der pH-Wert mit 30 Gew%-iger NaOH auf etwa 10 gestellt und 30 min lang mit einem Zahnscheibenrührer bei 3000 UpM gerührt. Die Zusammensetzung wurde dabei so gewählt, dass die Viskosität der Klebstoffe in einem vergleichbaren Bereich zwischen 1000 und 3000 mPas (Brookfield-Viskosität, 100 UpM, 25 °C) liegt. Als Referenz dienten Amitrocoll C57 und Dextrin 20.921 (beide von Agrana, Österreich). Die Zusammensetzungen der Klebstoffformulierungen sind Tabelle 3 entnehmbar.

Die Ermittlung der Aushärtezeit der Klebstoffformulierungen wurde mit Methode 3 vorgenommen, wobei zwei Schichtdicken (60 und 120 µm) getestet wurden. Wie aus Tabelle 3 ersichtlich ist, brauchen den erfindungsgemäßen Klebstoffformulierungen eine viel geringere Wassermenge zugegeben werden als Amitrocoll C57, um die Viskosität auf einen Wert im oben angegebenen Bereich einzustellen. Der Wassergehalt in den Klebstoffformulierungen enthaltend die erfindungsgemäßen Stärkeprodukte der Versuche 3 und 13 beträgt 31 Gew%, während er in der Klebstoffformulierung enthaltend Amitrocoll C57 bei 46,7 Gew% liegt (jeweils bezogen auf das Gesamtgewicht der Klebstoffformulierung). Dadurch kann der Wassereintrag in das zu verklebende Material (z.B. Papier) und dementsprechend die Trocknungszeit reduziert werden. Wie weiters aus der Tabelle 3 zu sehen ist, haben die erfindungsgemäßen Klebstoffformulierungen eine deutlich kürzere Aushärtezeit als Dextrin 20.921.

**Tabelle 3: Zusammensetzungen und Eigenschaften von Klebstoffformulierungen**

| | | **Referenzen** | | **Erfindung** | |
|---|---|---|---|---|---|
| | | **Amitrocoll C57** | **Dextrin 20.921** | **Versuch Nr. 3** | **Versuch Nr. 13** |
| Stärke | (g) | 60 | 60 | 60 | 60 |
| Calciumcarbonat | (g) | 140 | 140 | 140 | 140 |
| Wasser | (g) | 175 | 90 | 90 | 90 |
| Biozid | (g) | 0,1 | 0,1 | 0,1 | 0,1 |
| Aushärtezeit (s) | 60 µm | 37 | 80 | 42 | 43 |
| | 120 µm | 75 | >150 | 60 | 63 |

### Methoden

### Methode 1 - Bestimmung der Viskosität und Viskositätsstabilität

In einem Becherglas wurden 1 bis 2 g NaOH (5 M, etwa 20 Gew% in Wasser) vorgelegt und mit Deionat auf 187,5 g aufgefüllt. Das Stärkeprodukt (hergestellt z.B. gemäß Beispiel 1) wurde in einer solchen Menge eingewogen, dass das Gesamtgewicht bei 250 g lag (250g - 187,5g = 62,5g Stärkeprodukt; entspricht 25 Gew% Stärkeprodukt in Wasser). Mit einem Zahnscheibenrührer wurde bei 1500 UpM für 30 min gerührt, und das Stärkeprodukt wurde unter Rühren eingestreut. Der pH-Wert wurde mit NaOH (3 Gew% in Wasser) auf ca. 7,5 bis 8,0 eingestellt. Je mehr NaOH benötigt wird, umso mehr NaOH sollte schon zu Beginn vorgelegt werden, um ein zu starkes Verdünnen zu verhindern. Der hierdurch hergestellte Kleister wurde anschließend einer Viskositätsmessung unterzogen. Alternativ kann das Becherglas auch mit Deionat auf 125 g aufgefüllt werden, und danach 125 g Stärke hinzugegeben werden (entspricht 50 Gew% Stärkeprodukt in Wasser).

Die Bestimmung der Viskosität (Brookfield-Viskosität) erfolgte mit einem Rotationsviskosimeter (Brookfield DV-ll+Pro, Brookfield, Deutschland) bei 25 °C und einer Umdrehungszahl von 100 UpM mit der Spindel 5 (Brookfield, Deutschland; dabei ist die Spindel 1 des Rotationsviskosimeters für niedrigviskose Substanzen und die Spindel 7 für hochviskose Substanzen geeignet). Die erste Messung wurde unmittelbar nach der Herstellung der Kleister durchgeführt (bei der Zeit t = 0), weitere Messungen erfolgten nach 24 h und 168 h, um die Viskositätsstabilität zu beurteilen. Als Maß für die Viskositätsstabilität wurde der Quotient der Viskositäten nach 168 h und 24 h herangezogen.

### Methode 2 - Bestimmung der Löslichkeit

10 g eines Stärkeprodukts (hergestellt z.B. gemäß Beispiel 1) in Trockensubstanz wurde in einem Becherglas mit einem Turbinenrührer in deionisiertes Wasser eingerührt (1500 UpM, 15 min), um eine 10 Gew%-ige Lösung zu erhalten. Diese wurde für 10 min bei 3000 UpM zentrifugiert und die Stärkekonzentration im Überstand wurde mittels eines Refraktometers (PAL-1, Atago, Japan) bestimmt. Die Löslichkeit in % ist das Verhältnis der gemessenen Stärkekonzentration zu der anfangs eingesetzten Stärkekonzentration von 10 Gew%.

### Methode 3 - Bestimmung der Klebeeigenschaften von Klebstoffformulierungen

Eine Handrakel wurde mit der gewünschten Schichtdicke (60 oder 120 µm) auf die Außenseite eines Wellenpapieres (Flächengewicht von 110 g/m²) gelegt, mit einer Klebstoffformulierung enthaltend ein Stärkeprodukt (Herstellung z.B. gemäß Beispiel 3) befüllt und über das Wellenpapier gezogen. Danach wurde ein Streifen Displaykarton (Flächengewicht von 170 g/m²) mit der Innenseite auf das geleimte Wellenpapier gelegt. Die zusammengelegten Papiere wurden mit der flachen Hand abgestreift und nochmals auf der Rückseite in gleicher Weise abgestreift. Das verklebte Laminat wurde nun langsam Stück für Stück von Hand auseinandergezogen (leicht ruckartig), bis ein vollständiger Faserriss festgestellt wurde. Unter einem vollständigen Faserriss wird ein Faserriss verstanden, der sich über die gesamte Verklebungsbreite erstreckt, d.h. in eine Richtung, die im Wesentlichen senkrecht auf die Zugrichtung steht. Der Zeitpunkt des vollständigen Faserrisses ist der Zeitpunkt, an dem die Klebstoffformulierung eine ausreichende Klebkraft erreicht hat. Die Dauer des Auseinanderziehens bis zum Zeitpunkt des vollständigen Faserrisses wird als Maß für die Aushärtezeit bis zum Erreichen einer solchen Klebkraft herangezogen. Sie wird in Sekunden angegeben und berechnet sich aus einem Mittelwert von drei einzelnen Messungen. Wenn nach 150 sec noch kein vollständiger Faserriss, und somit keine ausreichende Verklebung, festgestellt werden konnte, wurde die Messung abgebrochen.

## Patentansprüche

1. Verfahren zur Herstellung eines Stärkeprodukts, umfassend die Schritte:
(a) Bereitstellen einer Stärke, und
(b) Coextrudieren der Stärke mit (i) einer Säure und/oder einem Salz einer Säure, und (ii) einem glyoxalhaltigen Vernetzer, um ein Stärkeprodukt zu erhalten,
**dadurch gekennzeichnet, dass** die Säure oder das Salz der Säure einen pKs-Wert von 2,7 oder darunter aufweist, und
dass die Menge des glyoxalhaltigen Vernetzers im Bereich von 0,1 bis 5,0 Gew% liegt, bezogen auf das Gewicht der Stärke.

2. Verfahren nach Anspruch 1, **dadurch gekennzeichnet, dass** die Menge des glyoxalhaltigen Vernetzers im Bereich von 0,5 bis 2,0 Gew% liegt, bezogen auf das Gewicht der Stärke.

3. Verfahren nach Anspruch 1 oder 2, **dadurch gekennzeichnet, dass** der glyoxalhaltige Vernetzer Glyoxal ist.

4. Verfahren nach einem der Ansprüche 1 bis 3, **dadurch gekennzeichnet, dass** die Säure und/oder das Salz einen pKs-Wert von 2,35 oder darunter aufweist.

5. Verfahren nach einem der Ansprüche 1 bis 4, **dadurch gekennzeichnet, dass** die Menge der Säure und/oder des Salzes im Bereich von 1,0 bis 6,0 Gew% liegt, bezogen auf das Gewicht der Stärke.

6. Verfahren nach einem der Ansprüche 1 bis 5, **dadurch gekennzeichnet, dass** die Säure ausgewählt ist aus der Gruppe umfassend Schwefelsäure, Salpetersäure, Phosphorsäure und eine Dicarbonsäure, oder eine Mischung davon.

7. Verfahren nach Anspruch 6, **dadurch gekennzeichnet, dass** die Dicarbonsäure Oxalsäure und/oder Maleinsäure umfasst.

8. Verfahren nach einem der Ansprüche 1 bis 7, **dadurch gekennzeichnet, dass** die Stärke in Schritt (b) zusätzlich mit einem Viskositätsstabilisator coextrudiert wird.

9. Verfahren nach Anspruch 6, **dadurch gekennzeichnet, dass** der Viskositätsstabilisator einen Fettalkohol umfasst, wobei der Fettalkohol 10 bis 20 Kohlenstoffatome pro Molekül enthält.

10. Verfahren nach Anspruch 8 oder 9, **dadurch gekennzeichnet, dass** der Viskositätsstabilisator in einer Menge von 0,1 bis 1,5 Gew% zugegeben wird, bezogen auf das Gewicht der Stärke.

11. Stärkeprodukt, erhältlich durch ein Verfahren nach einem der Ansprüche 1 bis 10, wobei das Stärkeprodukt eine Menge des glyoxalhaltigen Vernetzers im Bereich von 0,1 bis 5,0 Gew% aufweist, bezogen auf das Gesamtgewicht des Stärkeprodukts.

12. Stärkeprodukt nach Anspruch 11, wobei das Stärkeprodukt bei 25 °C eine Viskositätsstabilität von 0,96 oder darunter aufweist, ermittelt gemäß der Beschreibung.

13. Stärkeprodukt nach Anspruch 11 oder 12, wobei das Stärkeprodukt bei 25 °C eine Viskosität von 600 mPas oder darunter aufweist, ermittelt gemäß der Beschreibung.

14. Streichfarbe, aufweisend ein Stärkeprodukt nach einem der Ansprüche 11 bis 13 in einer Menge von 0,5 bis 14,0 Gew%, bezogen auf das Gesamtgewicht der Streichfarbe.

15. Klebstoffformulierung, aufweisend ein Stärkeprodukt nach einem der Ansprüche 11 bis 13 in einer Menge von 5,0 bis 65,0 Gew%, bezogen auf das Gesamtgewicht der Klebstoffformulierung.
